# EUROPÄISCHE PATENTANMELDUNG

(11) **EP 4 807 111 A1**
(43) Veröffentlichungstag der Anmeldung: **16.09.2026**
(21) Anmeldenummer: 26157281.2
(22) Anmeldetag: 09.02.2026
(51) Int. Cl.: E05B 71/00, B62H 5/00

(54) **KETTE ZUR SICHERUNG EINES ZWEIRADS**

(30) Priorität: 10.03.2025 DE 102025108895
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Eine Kette zur Sicherung eines Zweirads umfasst mehrere Kettenglieder, wobei an einem ersten Ende der Kette eine Verriegelungseinrichtung und an einem zweiten Ende der Kette eine Öse vorgesehen ist, durch die das erste Ende der Kette hindurch geführt werden kann, um eine geschlossene Schlaufe zu bilden. Die Öse ist länglich ausgebildet und umfasst entlang ihrer Längserstreckungsrichtung einen Befestigungsabschnitt und einen Durchgangsabschnitt. Der Durchgangsabschnitt ist breiter als der Befestigungsabschnitt der Öse.

## Beschreibung

Die Erfindung betrifft eine Kette zur Sicherung eines Zweirads, mit mehreren Kettengliedern zwischen einem ersten Ende und einem zweiten Ende der Kette, wobei an dem ersten Ende der Kette eine Verriegelungseinrichtung und an dem zweiten Ende der Kette eine Öse vorgesehen ist, durch die das erste Ende der Kette hindurch geführt werden kann, um eine geschlossene Schlaufe zu bilden.

Eine derartige Kette dient als Diebstahlschutz für ein Zweirad (beispielsweise Fahrrad, Pedelec, Lastenrad, Motorrad usw.). Mittels der Kette kann das Zweirad in sich selbst verriegelt werden (beispielsweise durch Blockieren eines Laufrads) und/oder an einem stationären Objekt festgelegt werden (beispielsweise Laternenpfosten oder Gebäudewand), und/oder ein Teil des Zweirads lässt sich gegen Diebstahl sichern (z.B. eines der Laufräder). Hierfür lässt sich mittels der Kette eine Kettenschlaufe bilden, die einen Teil des Zweirads und/oder das stationäre Objekt umschlingt. Zur Bildung einer geschlossenen Schlaufe wird das erste Ende der Kette durch die am zweiten Ende der Kette befindliche Öse hindurch geführt und danach festgelegt, beispielsweise durch Verriegeln an einem zugeordneten Schloss oder Gegenstück. Die an dem ersten Ende der Kette befindliche Verriegelungseinrichtung kann beispielsweise an dem Zweirad verriegelt werden, ähnlich wie dies in DE 103 58 300 A1 gezeigt ist, oder an einem beliebig angeordneten separaten Schloss, ähnlich wie dies in DE 10 2020 131 332 A1 gezeigt ist, oder an der Kette selbst, ähnlich wie dies in EM 015058134 gezeigt ist.

Bei manchen Anwendungen ist es erwünscht, die Kette mit dem zweiten Ende voraus durch einen Zwischenraum zwischen zwei benachbarten Speichen eines Laufrads des Zweirads hindurch zu führen, beispielsweise um das Laufrad zu blockieren oder gegen ein Entfernen zu sichern. Hierzu führt der Benutzer das zweite Ende der Kette typischerweise mit der einen Hand möglichst tief in den Zwischenraum zwischen den Speichen ein und versucht mit der anderen Hand, das zweite Ende der Kette und insbesondere die dort befindliche Öse zu ergreifen, um die Kette weiter durch das Laufrad hindurch ziehen zu können. In Abhängigkeit von der Einbauumgebung des betreffenden Laufrads (zum Beispiel mit Gepäckträger, Speichenschutz oder dergleichen) kann dies unterschiedlich schwierig sein.

Es ist eine Aufgabe der Erfindung, eine Kette zur Sicherung eines Zweirads anzugeben, die für den Benutzer die Handhabung erleichtert, insbesondere für ein Sichern eines nicht gut zugänglichen Laufrads des Zweirads.

Diese Aufgabe wird durch eine Kette mit den Merkmalen des Anspruchs 1 gelöst.

Bei einer derartigen Kette ist die an dem zweiten Ende befindliche Öse länglich ausgebildet, und die Öse umfasst entlang ihrer Längserstreckungsrichtung einen Befestigungsabschnitt und einen Durchgangsabschnitt, Der Befestigungsabschnitt der Öse weist eine erste Breite auf und bildet eine Kettenglied-Aufnahmeöffnung, in der das an dem zweiten Ende der Kette befindliche Kettenglied aufgenommen ist. Der Durchgangsabschnitt der Öse weist eine zweite Breite auf und bildet eine Durchführöffnung, die derart bemessen ist, dass das erste Ende der Kette mitsamt der Verriegelungseinrichtung durch die Durchführöffnung hindurch geführt werden kann, um die erläuterte geschlossene Schlaufe zu bilden. Die zweite Breite des Durchgangsabschnitts ist größer als die erste Breite des Befestigungsabschnitts der Öse.

Die Kette, die auch als Gliederkette bezeichnet werden kann, weist somit mehrere Kettenglieder auf, die der Reihe nach ineinander greifen. Die Kettenglieder können beispielsweise aus Metall gefertigt sein. Die einzelnen Kettenglieder können insbesondere umfänglich geschlossen sein. Die Kettenglieder können beispielsweise als im Wesentlichen O-förmige, insbesondere ovale Rundkettenglieder ausgebildet sein. Eine derartige Kette bietet eine hohe Beweglichkeit in allen Richtungen bei hoher Stabilität und Sicherheit gegenüber einem gewaltsamen Öffnen.

An dem ersten Ende der Kette, insbesondere an dem am ersten Ende befindlichen (ersten) Kettenglied, ist die Verriegelungseinrichtung befestigt, beispielsweise ein Kloben, eine weitere Öse oder ein Schloss, wie nachfolgend noch erläutert wird, An dem zweiten Ende der Kette, insbesondere an dem am zweiten Ende befindlichen (letzten) Kettenglied, ist die Öse befestigt, die für das Bilden der erläuterten geschlossenen Schlaufe benötigt wird.

Die Öse weist insgesamt eine Längsform auf, wobei die Längserstreckungsrichtung der Öse vorzugsweise der Längserstreckungsrichtung der Kette entspricht, wenn letztere geradlinig ausgerichtet ist. Die Öse umfasst entlang ihrer Längserstreckungsrichtung den Befestigungsabschnitt und Durchgangsabschnitt. Beispielsweise kann die Öse insgesamt (also bezogen auf den Befestigungsabschnitt und den Durchgangsabschnitt) ungefähr doppelt so lang wie breit ausgebildet sein, wobei auch andere Längen-/Breitenverhältnisse möglich sind, beispielsweise mit einem Wert im Bereich von 1,5 bis 3.

Der Befestigungsabschnitt bildet die Kettenglied-Aufnahmeöffnung, in die das an dem zweiten Ende der Kette befindliche letzte Kettenglied eingreift, um die Öse dauerhaft an der Kette zu befestigen. Der Durchgangsabschnitt bildet die Durchführöffnung für das erste Ende der Kette. Der Durchgangsabschnitt der Öse weist eine Breite auf, die größer ist als die Breite des Befestigungsabschnitts, wobei die Bezeichnungen "Breite" und "Weite" im vorliegenden Zusammenhang generell als Dimensionen in einer Richtung quer (insbesondere senkrecht) zu der genannten Längserstreckungsrichtung der Öse zu verstehen sind. Somit bildet der Befestigungsabschnitt der Öse eine Art schmalen Längsfortsatz des Durchgangsabschnitts der Öse. Die Öse besitzt eine ähnliche Form wie eine Glocke. Die an dem ersten Ende der Kette befestigte Verriegelungseinrichtung kann vorzugsweise nur durch die Durchführöffnung des Durchgangsabschnitts der Öse hindurch geführt werden, nicht jedoch durch die schmälere Kettenglied-Aufnahmeöffnung des Befestigungsabschnitts.

Die längliche Form der Öse ist - beispielsweise im Vergleich zu einer kreisrunden Form - dahingehend von Vorteil, dass das zweite Ende der Kette mit der länglichen Öse voraus leichter mit einer Hand zwischen den Speichen eines Laufrads eines Zweirads hindurch geführt und mit der anderen Hand ergriffen werden kann. Die längliche Öse kann hierfür nämlich an dem Befestigungsabschnitt gehalten werden und kippt somit nicht weg, wie dies der Fall sein kann, wenn der Benutzer die Kette lediglich an dem letzten Kettenglied hält. Gleichwohl kann die Öse auf einfache und kostengünstige Weise ähnlich einem Rundkettenglied hergestellt werden, da beispielsweise kein separater Befestigungsfortsatz (für das zugeordnete Kettenglied) angebracht (beispielsweise angeformt oder angeschweißt) werden muss. Um die relativ zu dem Durchgangsabschnitt schmälere Formgebung des Befestigungsabschnitts herbeizuführen, sind lediglich wenige zusätzliche Biegeprozesse erforderlich. Da das an dem zweiten Ende der Kette befindliche und an der Öse befestigte letzte Kettenglied innerhalb des Befestigungsabschnitts der Öse untergebracht ist, behindert das letzte Kettenglied nicht das Hindurchführen des ersten Endes der Kette durch die Öse bei dem erläuterten Bilden einer geschlossenen Schlaufe.

Nachfolgend werden weitere vorteilhafte Ausführungsformen erläutert.

Die Kettenglied-Aufnahmeöffnung und die Durchführöffnung können eine einzige gemeinsame Öffnung der Öse bilden. Somit kann die Öse im Wesentlichen ringartig ausgebildet sein.

Die Öse kann beispielsweise die Form eines länglichen Rings aufweisen, der an einem Längsende (insbesondere an dem der Kette zugewandten Ende) zu einer geringeren Breite (insbesondere der genannten ersten Breite) verformt ist.

Die Öse kann insbesondere umfänglich geschlossen sein, beispielsweise durch Verschweißen zweier Enden eines zu einer Ringform gebogenen Strangmaterials. Alternativ hierzu kann die Öse umfänglich im Wesentlichen geschlossen sein, beispielsweise durch ein Aneinanderliegen zweier Enden eines zu einer Ringform gebogenen Strangmaterials.

Der Befestigungsabschnitt und/oder die Kettenglied-Aufnahmeöffnung der Öse können entlang der Längserstreckungsrichtung der Öse länglich ausgebildet sein. Hierdurch ergibt sich ein noch einfacheres Durchfädeln der Öse zwischen den Speichen eines Laufrads eines Zweirads.

Der Durchgangsabschnitt und/oder die Durchführöffnung der Öse können entlang der Längserstreckungsrichtung der Öse länglich ausgebildet sein. Hierdurch ergibt sich wiederum ein noch einfacheres Durchfädeln der Öse zwischen den Speichen eines Laufrads eines Zweirads. Insbesondere kann die Kettenglied-Aufnahmeöffnung im Wesentlichen die Form eines länglichen Schlitzes aufweisen, in dem das an dem zweiten Ende der Kette befindliche letzte Kettenglied seitlich gefangen ist und entlang der Längserstreckungsrichtung der Öse ein gewisses Bewegungsspiel besitzt.

Bei einigen Ausführungsformen kann der Befestigungsabschnitt der Öse zwei erste Längsabschnitte und einen abgerundeten ersten Verbindungsabschnitt aufweisen, der die zwei ersten Längsabschnitte miteinander verbindet, wobei die lichte Weite der Kettenglied-Aufnahmeöffnung zwischen den zwei ersten Längsabschnitten derart bemessen ist, dass das an dem zweiten Ende der Kette befindliche letzte Kettenglied in der Kettenglied-Aufnahmeöffnung zwar seitlich umschlossen, jedoch frei beweglich aufgenommen ist. Somit ist durch den Befestigungsabschnitt der Öse bzw. durch dessen Kettenglied-Aufnahmeöffnung ein minimaler seitlicher Freiraum gebildet, um das zugeordnete letzte Kettenglied befestigen zu können, ohne dass dieses jedoch starr befestigt ist. Vielmehr ist bei einer solchen Ausführungsform das zugeordnete Kettenglied an der Öse ähnlich frei beweglich (insbesondere schwenkbar), wie dies für die entlang der Kette benachbarten Kettenglieder relativ zueinander der Fall ist. Somit kann die Kette für ein Verstauen bei Nichtgebrauch trotz der Längsform der Öse zu einem kompakten Gebildet zusammengelegt werden.

Bei einigen Ausführungsformen können die genannten zwei ersten Längsabschnitte des Befestigungsabschnitts geradlinig ausgebildet und/oder parallel zueinander ausgerichtet sein. Hierdurch kann ein für die Herstellung der Öse verwendetes Strangmaterial optimal dafür ausgenutzt werden, die erwünschte Längsform der Öse bei relativ geringer Breite des Befestigungsabschnitts herbeizuführen.

Bei einigen Ausführungsformen kann der Durchgangsabschnitt der Öse zwei zweite Längsabschnitte und einen abgerundeten zweiten Verbindungsabschnitt aufweisen, der die zwei zweiten Längsabschnitte miteinander verbindet, wobei die lichte Weite der Durchführöffnung zwischen den zwei zweiten Längsabschnitten größer ist als die lichte Weite der Kettenglied-Aufnahmeöffnung zwischen den zwei ersten Längsabschnitten. Die lichte Weite der Durchführöffnung kann derart bemessen sein, dass ein Durchführen des ersten Endes der Kette mitsamt der Verriegelungseinrichtung mit einem hinreichenden seitlichen Spiel für eine komfortable Handhabung möglich ist. Beispielsweise kann die lichte Weite der Durchführöffnung um einen Faktor größer sein als die lichte Weite der Kettenglied-Aufnahmeöffnung, der einen Wert im Bereich von 1,5 bis 3 besitzt.

Bei einigen Ausführungsformen kann die Länge der zwei zweiten Längsabschnitte des Durchgangsabschnitts größer sein als die Länge der zwei ersten Längsabschnitte des Befestigungsabschnitts. Hierdurch wird die Längsform der Öse überwiegend durch den Durchgangsabschnitt bewerkstelligt, der das Durchführen des ersten Endes der Kette mitsamt der Verriegelungseinrichtung ermöglichen soll, während an dem Befestigungsabschnitt der Öse lediglich das zugeordnete letzte Kettenglied aufgenommen werden muss.

Bei einigen Ausführungsformen können die genannten zwei zweiten Längsabschnitte des Durchgangsabschnitts geradlinig ausgebildet und/oder parallel zueinander ausgerichtet sein. Hierdurch kann wiederum ein für die Herstellung der Öse verwendetes Strangmaterial optimal dafür ausgenutzt werden, die erwünschte Längsform der Öse bei der erforderlichen (minimalen) Breite des Durchgangsabschnitts herbeizuführen.

Bei einigen Ausführungsformen können die zwei ersten Längsabschnitte des Befestigungsabschnitts mit den zwei zweiten Längsabschnitten des Durchgangsabschnitts verbunden sein, insbesondere über einen jeweiligen dritten Verbindungsabschnitt, der schräg zu der Längserstreckungsrichtung der Öse verlaufen kann. Somit können der Befestigungsabschnitt und der Durchgangsabschnitt zwei deutlich voneinander abgestufte unterschiedliche Breiten aufweisen und lediglich in einem Übergangsbereich, der durch die zwei dritten Verbindungsabschnitte gebildet ist, ineinander übergehen.

Die Öse kann entlang ihres Umfangs einen im Wesentlichen konstanten Querschnitt aufweisen. Mit anderen Worten kann der Querschnitt eines für die Bildung der Öse verwendeten Strangmaterials abgesehen von Verformungen, die bei Biegeprozessen typischerweise auftreten, eine gleichbleibende Form und Dicke aufweisen. Die Öse kann entlang ihres Umfangs einen mehreckigen (insbesondere viereckigen, beispielsweise quadratischen, fünfeckigen, sechseckigen usw.) Querschnitt, oder einen runden (insbesondere kreisrunden oder ovalen) Querschnitt aufweisen.

Die Öse kann teilweise mit einer Kunststoffumhüllung versehen sein, insbesondere mit einer Umhüllung, die an der Öse mit einem durchgehenden flächigen Kontakt unmittelbar anliegt. Eine solche Kunststoffumhüllung kann durch ein Plastifizieren der Öse (beispielsweise ein sogenanntes "dip coating") gebildet werden. Hierdurch kann das zu sichernde Zweirad und insbesondere dessen Rahmen vor Beschädigungen durch die Öse geschützt werden. Vorzugsweise ist der Durchgangsabschnitt der Öse mit einer derartigen Kunststoffumhüllung versehen (insbesondere vollständig), wobei jedoch der Befestigungsabschnitt der Öse vollständig oder teilweise (insbesondere an einem dem Durchgangsabschnitt entgegengesetzten Ende) ohne eine derartige Kunststoffumhüllung ausgebildet ist. Somit bleibt die Öse relativ zu dem am zweiten Ende der Kette befindlichen letzten Kettenglied besonders gut frei beweglich.

Die Kette kann entlang ihrer gesamten Länge zwischen dem ersten Ende und dem zweiten Ende von einem flexiblen Schutzmantel umhüllt sein, um das zu sichernde Zweirad und insbesondere dessen Rahmen vor Beschädigungen durch die Kettenglieder zu schützen. Ein derartiger Schutzmantel kann aus Kunststoff oder Textil gefertigt sein.

Was die an dem ersten Ende der Kette befindliche, insbesondere dauerhaft befestigte, Verriegelungseinrichtung betrifft, so kann diese beispielsweise einen Kloben, eine weitere Öse oder ein Schloss mit einem Verriegelungsmechanismus umfassen. Ein derartiger Kloben kann dazu ausgebildet sein, an einem zugeordneten Schloss, welches nicht notwendigerweise Teil der Kette ist, verriegelt zu werden. Das dem Kloben zugeordnete Schloss kann beispielsweise ein Schloss eines Zweirads sein (z.B. Rahmenschloss) oder ein stationär angeordnetes Schloss (z.B. an einer Gebäudewand montiert). Der Kloben kann beispielsweise stiftförmig sein und/oder wenigstens eine Verbreiterung aufweisen (die von einem Riegel des zugeordneten Schlosses hintergriffen werden kann) und/oder wenigstens eine Eingriffsvertiefung aufweisen, in die ein Riegel des zugeordneten Schlosses einzugreifen vermag (beispielsweise eine Nut, insbesondere eine Ringnut). Ähnlich dem Kloben kann die weitere Öse an dem ersten Ende der Kette dazu ausgebildet sein, an einem zugeordneten Schloss verriegelt zu werden. Die weitere Öse an dem ersten Ende der Kette kann eine Eingriffsöffnung für einen Riegel des zugeordneten Schlosses aufweisen und/oder kleiner ausgebildet sein als die vorstehend beschriebene Öse an dem zweiten Ende der Kette. Das an dem ersten Ende der Kette befindliche Schloss kann einen mechanischen oder elektromechanischer Verriegelungsmechanismus aufweisen. Das Schloss kann beispielsweise einen beweglichen Riegel aufweisen. Das Schloss kann an einem zugeordneten Gegenstück (z.B. Kloben, Verbreiterung) der Kette selbst, oder an einem zugeordneten Gegenstück des Zweirads, oder an einem zugeordneten Gegenstück eines stationär angeordneten Objekts (z.B. Gebäudewand) verriegelt und hierdurch festgelegt werden.

Die Erfindung wird nachfolgend lediglich beispielhaft anhand der Zeichnung erläutert.

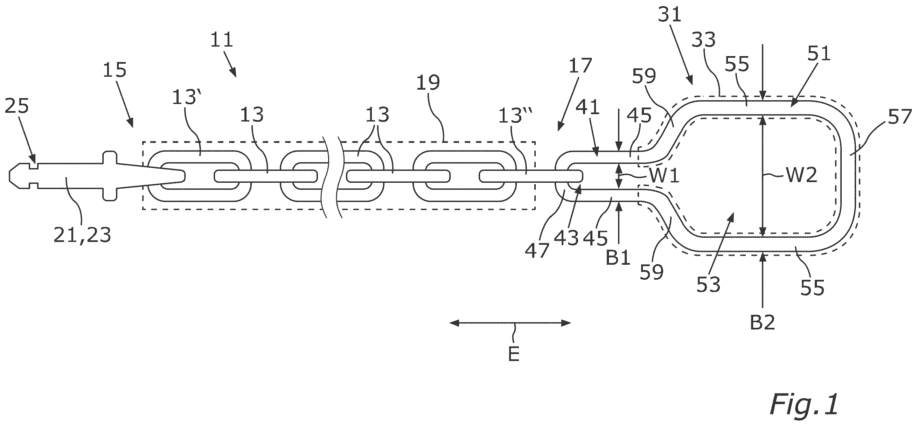

- Fig. 1: zeigt eine Seitenansicht einer Kette.

Die in Fig. 1 gezeigte Kette 11 dient zur Sicherung eines Zweirads gegen Diebstahl. Die Kette 11 umfasst mehrere ineinander greifende Kettenglieder 13, darunter ein erstes Kettenglied 13' an einem ersten Ende 15 der Kette 11 und ein letztes Kettenglied 13" an einem zweiten Ende 17 der Kette 11. Die Kette 11 kann optional von einem Schutzmantel 19 umhüllt sein (in Fig. 1 gestrichelt dargestellt). An dem ersten Ende 15 der Kette 11 ist eine Verriegelungseinrichtung 21 in Form eines stiftförmigen Klobens 23 dauerhaft befestigt. An dem zweiten Ende 17 der Kette 11 ist eine umfänglich geschlossene Öse 31 dadurch dauerhaft befestigt, dass das letzte Kettenglied 13" in die Öse 31 eingreift. Somit kann die im Wesentlichen ringförmige Öse 31 ohne einen zusätzlichen Befestigungsfortsatz zum Befestigen der Öse 31 an dem letzten Kettenglied 13" ausgebildet sein. Optional kann ein Teil der Öse 31 (nämlich der gesamte nachstehend noch genannte Durchgangsabschnitt 51 und lediglich ein Teil des nachstehend noch genannten Befestigungsabschnitts 41) mit einer Kunststoffumhüllung 33 versehen sein (in Fig. 1 gestrichelt dargestellt).

Die Öse 31 ist länglich ausgebildet und umfasst entlang ihrer Längserstreckungsrichtung E einen Befestigungsabschnitt 41 und einen Durchgangsabschnitt 51. Der Befestigungsabschnitt 41 weist eine erste Breite B1 auf und bildet eine Kettenglied-Aufnahmeöffnung 43, in der das an dem zweiten Ende 17 der Kette 11 befindliche letzte Kettenglied 13" aufgenommen ist. Die Kettenglied-Aufnahmeöffnung 43 ist entlang der Längserstreckungsrichtung E der Öse 31 länglich ausgebildet. Der Befestigungsabschnitt 41 umfasst zwei geradlinig ausgebildete und parallel zueinander und zu der Längserstreckungsrichtung E ausgerichtete erste Längsabschnitte 45 sowie einen abgerundeten ersten Verbindungsabschnitt 47, der die zwei ersten Längsabschnitte 45 miteinander verbindet. Die lichte Weite W1 der Kettenglied-Aufnahmeöffnung 43 zwischen den zwei ersten Längsabschnitten 45 ist derart bemessen, dass das an dem zweiten Ende 17 der Kette 11 befindliche letzte Kettenglied 13" in der Kettenglied-Aufnahmeöffnung 43 seitlich umschlossen, jedoch mit Bewegungsspiel aufgenommen ist.

Der Durchgangsabschnitt 51 der Öse 31 weist eine zweite Breite B2 auf und bildet eine Durchführöffnung 53 für das erste Ende 15 der Kette 11. Die Kettenglied-Aufnahmeöffnung 43 und die Durchführöffnung 53 bilden eine einzige gemeinsame Öffnung der Öse 31. Der Durchgangsabschnitt 51 ist entlang der Längserstreckungsrichtung E der Öse 31 länglich ausgebildet. Der Durchgangsabschnitt 51 der Öse umfasst zwei geradlinig ausgebildete und parallel zueinander und zu der Längserstreckungsrichtung E ausgerichtete zweite Längsabschnitte 55 sowie einen abgerundeten zweiten Verbindungsabschnitt 57, der die zwei zweiten Längsabschnitte 55 miteinander verbindet. Die zwei ersten Längsabschnitte 45 des Befestigungsabschnitts 41 sind mit den zwei zweiten Längsabschnitten 55 des Durchgangsabschnitts 51 über zwei dritte Verbindungsabschnitte 59 verbunden, die schräg zu der Längserstreckungsrichtung E der Öse 31 verlaufen. Die zweite Breite B2 des Durchgangsabschnitts 51 ist größer als die erste Breite B1 des Befestigungsabschnitts 41 der Öse 31. Die lichte Weite W2 der Durchführöffnung 52 zwischen den zwei zweiten Längsabschnitten 55 ist größer als die lichte Weite W1 der Kettenglied-Aufnahmeöffnung 43 zwischen den zwei ersten Längsabschnitten 45.

Mittels der Kette 11 kann ein Zweirad oder ein Teil eines Zweirads gegen Diebstahl gesichert werden. Hierfür kann mittels der Kette 11 eine geschlossene Schlaufe gebildet werden, indem das erste Ende 15 der Kette 11 durch die am zweiten Ende 17 der Kette 11 befindliche Öse 31 hindurch geführt wird. Die Durchführöffnung 53 des Durchgangsabschnitts 51 der Öse 31 ist derart bemessen, dass das erste Ende 15 der Kette 11 mitsamt der Verriegelungseinrichtung 21 (hier: Kloben 23) durch die Durchführöffnung 53 hindurch passt. Die geschlossene Schlaufe kann beispielsweise um einen Teil eines Zweirads oder ein stationäres Objekt herum gebildet werden. Nach dem Durchführen des Klobens 23 durch die Öse 31 kann der Kloben 23 verriegelt werden, beispielsweise indem ein Riegel eines zugeordneten Schlosses (in Fig. 1 nicht gezeigt) in eine Eingriffsnut 25 des Klobens 23 eingreift.

Um mittels der Kette 11 ein Laufrad des Zweirads zu blockieren oder gegen Diebstahl zu sichern, kann das zweite Ende 17 der Kette 11 durch einen Zwischenraum zwischen zwei Speichen des Laufrads hindurch gefädelt werden. Hierfür kann der Benutzer das zweite Ende 17 der Kette 11 mit der einen Hand möglichst tief in den Zwischenraum einführen und mit der anderen Hand (von der anderen Seite des Laufrads aus) ergreifen, um sodann die Kette 11 weiter durch das Laufrad hindurch ziehen zu können.

Hierfür ist die längliche Form der Öse 31 von Vorteil, da das zweite Ende 17 der Kette 11 mit der länglichen Öse 31 voraus leichter durch den Zwischenraum zwischen zwei benachbarten Speichen hindurch geführt und mit der anderen Hand ergriffen werden kann. Die Öse 31 umfasst nämlich nicht nur den für die Durchführöffnung 53 erforderlichen Durchgangsabschnitt 51, sondern zusätzlich den Befestigungsabschnitt 41 als integrale Verlängerung des Durchgangsabschnitts 51. Gleichwohl ist die Öse 31 einfach zu fertigen, da lediglich wenige zusätzliche Biegeprozesse erforderlich sind, um die relativ zu dem Durchgangsabschnitt 51 schmälere Formgebung des Befestigungsabschnitts 41 herbeizuführen. Der relative schmale Befestigungsabschnitt 41 nimmt bei der bestimmungsgemäßen Benutzung der Kette 11 auch nur wenig zusätzlichen Raum in Anspruch.

### Bezugszeichenliste

- 11: Kette
- 13, 13', 13": Kettenglied
- 15: erstes Ende
- 17: zweites Ende
- 19: Schutzmantel
- 21: Verriegelungseinrichtung
- 23: Kloben
- 25: Eingriffsnut
- 31: Öse
- 33: Kunststoffumhüllung
- 41: Befestigungsabschnitt
- 43: Kettenglied-Aufnahmeöffnung
- 45: erster Längsabschnitt
- 47: erster Verbindungsabschnitt
- 51: Durchgangsabschnitt
- 53: Durchführöffnung
- 55: zweiter Längsabschnitt
- 57: zweiter Verbindungsabschnitt
- 59: dritter Verbindungsabschnitt
- E: Längserstreckungsrichtung
- B1: erste Breite
- B2: zweite Breite
- W1: lichte Weite
- W2: lichte Weite

## Patentansprüche

1. Kette (11) zur Sicherung eines Zweirads, mit mehreren Kettengliedern (13, 13', 13") zwischen einem ersten Ende (15) und einem zweiten Ende (17) der Kette (11), wobei an dem ersten Ende (15) der Kette (11) eine Verriegelungseinrichtung (21) und an dem zweiten Ende (17) der Kette (11) eine Öse (31) vorgesehen ist, durch die das erste Ende (15) der Kette (11) hindurch geführt werden kann, um eine geschlossene Schlaufe zu bilden, wobei die Öse (31) länglich ausgebildet ist und entlang ihrer Längserstreckungsrichtung (E) einen Befestigungsabschnitt (41) und einen Durchgangsabschnitt (51) umfasst,
wobei der Befestigungsabschnitt (41) eine erste Breite (B1) aufweist und eine Kettenglied-Aufnahmeöffnung (43) bildet, in der das an dem zweiten Ende (17) der Kette (11) befindliche Kettenglied (13") aufgenommen ist, und wobei der Durchgangsabschnitt (51) eine zweite Breite (B2) aufweist und eine Durchführöffnung (53) bildet, die derart bemessen ist, dass das erste Ende (15) der Kette (11) mitsamt der Verriegelungseinrichtung (21) durch die Durchführöffnung (53) hindurch geführt werden kann, wobei die zweite Breite (B2) des Durchgangsabschnitts (51) größer ist als die erste Breite (B1) des Befestigungsabschnitts (41) der Öse (31).

2. Kette (11) nach Anspruch 1,
wobei die Kettenglied-Aufnahmeöffnung (43) und die Durchführöffnung (53) eine einzige gemeinsame Öffnung der Öse (31) bilden.

3. Kette (11) nach Anspruch 1 oder 2,
wobei der Befestigungsabschnitt (41) und/oder die Kettenglied-Aufnahmeöffnung (43) der Öse (31) entlang der Längserstreckungsrichtung (E) der Öse (31) länglich ausgebildet sind.

4. Kette (11) nach einem der vorhergehenden Ansprüche,
wobei der Durchgangsabschnitt (51) und/oder die Durchführöffnung (53) der Öse (31) entlang der Längserstreckungsrichtung (E) der Öse (31) länglich ausgebildet sind.

5. Kette (11) nach einem der vorhergehenden Ansprüche,
wobei der Befestigungsabschnitt (41) der Öse (31) zwei erste Längsabschnitte (45) und einen abgerundeten ersten Verbindungsabschnitt (47) umfasst, der die zwei ersten Längsabschnitte (45) miteinander verbindet, wobei die lichte Weite (W1) der Kettenglied-Aufnahmeöffnung (43) zwischen den zwei ersten Längsabschnitten (45) derart bemessen ist, dass das an dem zweiten Ende (17) der Kette (11) befindliche Kettenglied (13") in der Kettenglied-Aufnahmeöffnung (43) seitlich umschlossen, jedoch frei beweglich aufgenommen ist.

6. Kette (11) nach Anspruch 5,
wobei die zwei ersten Längsabschnitte (45) des Befestigungsabschnitts (41) geradlinig ausgebildet und/oder parallel zueinander sind.

7. Kette (11) nach Anspruch 5 oder 6,
wobei der Durchgangsabschnitt (51) der Öse (31) zwei zweite Längsabschnitte (55) und einen abgerundeten zweiten Verbindungsabschnitt (57) umfasst, der die zwei zweiten Längsabschnitte (55) miteinander verbindet, wobei die lichte Weite (W2) der Durchführöffnung (53) zwischen den zwei zweiten Längsabschnitten (55) größer ist als die lichte Weite (W1) der Kettenglied-Aufnahmeöffnung (43) zwischen den zwei ersten Längsabschnitten (45).

8. Kette (11) nach Anspruch 7,
wobei die Länge der zwei zweiten Längsabschnitte (55) des Durchgangsabschnitts (51) größer ist als die Länge der zwei ersten Längsabschnitte (45) des Befestigungsabschnitts (41).

9. Kette (11) nach Anspruch 7 oder 8,
wobei die zwei zweiten Längsabschnitte (55) des Durchgangsabschnitts (51) geradlinig ausgebildet und/oder parallel zueinander sind.

10. Kette (11) nach einem der Ansprüche 7 bis 9,
wobei die zwei ersten Längsabschnitte (45) des Befestigungsabschnitts (41) mit den zwei zweiten Längsabschnitten (55) des Durchgangsabschnitts (51) verbunden sind, insbesondere über einen jeweiligen dritten Verbindungsabschnitt (59), der schräg zu der Längserstreckungsrichtung (E) der Öse (31) verläuft.

11. Kette (11) nach einem der vorhergehenden Ansprüche,
wobei die Öse (31) entlang ihres Umfangs einen im Wesentlichen konstanten Querschnitt aufweist.

12. Kette (11) nach einem der vorhergehenden Ansprüche,
wobei der Durchgangsabschnitt (51) der Öse (31) mit einer Kunststoffumhüllung versehen ist, wobei der Befestigungsabschnitt (41) der Öse (31) zumindest teilweise ohne eine derartige Kunststoffumhüllung ausgebildet ist.

13. Kette (11) nach einem der vorhergehenden Ansprüche,
wobei die an dem ersten Ende (15) der Kette (11) befindliche Verriegelungseinrichtung (21) einen Kloben (23), der an einem zugeordneten Schloss verriegelbar ist, oder eine weitere Öse, oder ein Schloss mit einem Verriegelungsmechanismus umfasst.
